# EUROPÄISCHE PATENTSCHRIFT

(11) **EP 0 512 160 B1**
(45) Veröffentlichungstag und Bekanntmachung des Hinweises auf die Patenterteilung: **02.03.1994**
(21) Anmeldenummer: 91120010.3
(22) Anmeldetag: 23.11.1991
(51) Int. Cl.: B21D 26/02

(54) **Autofrettagevorrichtung für Rohre**
Autofrettage for tubes
Autofrettage de tubes

(30) Priorität: 10.05.1991 DE 4115284
(43) Veröffentlichungstag der Anmeldung: 11.11.1992
(73) Patentinhaber: Rheinmetall Industrie GmbH, 40880 Ratingen (DE)
(72) Erfinder: Isgen, Helmut, W-4156 Willich 3 (DE)

(56) Entgegenhaltungen:
- FR-A- 577 624
- FR-A- 602 690
- GB-A- 825 783
- US-A- 2 060 024
- US-A- 4 417 459

## Beschreibung

Die Erfindung betrifft eine Autofrettagevorrichtung für Rohre, insbesondere Waffenrohre, nach dem Oberbegriff das Anspruchs 1.

Zur abschnittweisen Autofrettage von Rohren wie Waffenrohrrohlingen ist es beispielsweise aus der FR-PS 602 690 bekannt, einen Dorn in das Rohr einzuführen, der in seinen Endbereichen mit Dichtungsanordnungen zum Abdichten eines zwischen dem Dorn und der Rohrinnenwand gebildeten, mit Druckmittel beaufschlagbaran Ringraums versehen ist. Hierbei wird der Dorn von einem Dornhalter aufgenommen, der als Zylinder zur stirnseitigen Beaufschlagung des Dorns mit Druckmittel dient. Der Dornhalter und das Rohr sind dabei in einer Halterung angeordnet. Zur Durchführung einer Autofrettage werden Drücke bis zu etwa 14000 bar verwendet. Aufgrunddessen und wegen der starren Anordnung des Dorns ergibt sich eine wesentliche Belastung des Dorns durch Querkräfte und damit verbunden eine geringe Lebensdauer sowie ein hohes Fertigungsrisiko.

Aufgabe der Erfindung ist es, eine Autofrettagevorrichtung nach dem Oberbegriff des Anspruchs 1 zu schaffen, die die kräftemäßige Beanspruchung des Dorn herabsetzt und somit seine Lebensdauer erhöht sowie das Fertigungsrisiko erniedrigt.

Diese Aufgabe wird entsprechend den Merkmalen des Anspruchs 1 gelöst.

Hierdurch wird erreicht, daß der Dorn schwimmend vom Rohr aufgenommen wird und durch seine axiale Kugelpfannenlagerung praktisch keinen Querkräften unterliegt, wodurch seine Lebensdauer wesentlich erhöht und das Fertigungsrisiko dementsprechend herabgesetzt wird.

Weitere Ausgestaltungen der Erfindung sind der nachfolgenden Beschreibung und den Unteransprüchen zu entnehmen.

Die Erfindung wird nachstehend anhand einer ausschnittweise und teilweise geschnitten dargestellten Autofrettagevorrichtung näher erläutert.

Ein zu behandelndes, dickwandiges Rohr 1, etwa ein Geschützrohr, an dem endseitig ein Zentrierring 2 angebracht ist, wird an beiden Enden in Gegenlagern 3 (nur eines dargestellt) aufgenommen. Der Zentrierring 2 wird mit dem benachbarten Gegenlager 3 verschraubt.

Zur Behandlung des Rohrs 1 wird ein Dorn 4 in das Rohr 1 eingeführt. Der Dorn 4 umfaßt einen langgestreckten Dornkern 5, der an einem Ende einen Druckmittelanschlußkopf 6 trägt, der mit dem Dornkern 5 verschraubt ist. Außerdem ist auf den Dornkern 5 ein Füllrohr 7 aufgeschraubt, wobei sich zwischen den benachbarten Stirnseiten des Druckmittelanschlußkopfes 6 und des Füllrohrs 7 ein umlaufender Ringspalt 8 befindet. Letzterer ist mit einem nicht dargestellten Druckmittelzuführkanal im Druckmittelanschlußkopf 6 verbunden. Dichtungsanordnungen 9 und 10 zwischen dem Druckmittelanschlußkopf 6 und dem Dornkern 5 bzw. dem Rohr 1 verhindern ein Austreten von Druckmittel nach außen und bewirken eine Zufuhr von Druckmittel in den Ringspalt 11 zwischen der Innenseite des Rohrs 1 und dem Füllrohr 7, wobei sich der Ringspalt 11 über den zu behandelnden Bereich des Rohrs 1 erstreckt und benachbart zum freien Ende des Dorns 4 durch eine weitere, nicht dargestellte Dichtungsanordnung zum anderen, nicht dargestellten Rohrende hin abgedichtet ist.

Der Druckmittelanschlußkopf 6 besitzt einen kegelstumpfförmigen Abschnitt 12 entsprechend einem korrespondierenden Führungskegel 13 im Gegenlager 3, wobei der Führungskegel 13 konzentrisch zur Achse des Rohrs 1 angeordnet ist.

Der Dorn 4 wird mit seinem Druckmittelanschlußkopf 6 von einem Dornhalter 14 lösbar aufgenommen, wobei Bajonettkämme 15 am Druckmittelanschlußkopf 6 vorgesehen sind, so daß der Dorn 4 nach seinem Einschieben und Verdrehen um beispielsweise 45° im Dornhalter 14 gehalten wird. Zusätzlich ist ein Verriegelungsbolzen 16 am Dornhalter 14 vorgesehen, der in eine Ausnehmung 17 am Druckmittelanschlußkopf 6 einfällt und den Dorn 4 gegen Verdrehen gegenüber dem Dornhalter 14 sichert.

Die axiale Ausnehmung 18 des Dornhalters 14 nimmt nicht nur den Dorn 4, d.h. dessen Druckmittelanschlußkopf 6 mit Spiel auf, sondern auch eine Kugelpfanne 19 und ein Kugelsegment 20 eines Kugelgelenks. Die Kugelpfanne 19 wird dabei an ihrer planen Rückseite von einem mit dem Dornhalter 14 verschraubten Flansch 21 eines zum Einschieben des Dorns 4 in den das Rohr 1 verwendeten Zylinders 22 abgestützt, während sich das Kugelsegment 20 mit seiner planen Vorderseite an der Stirnseite des Dorns 4 abstützt, d.h. die beiden Teile 19, 20 werden lose vom Dornhalter 14 aufgenommen. Die beiden Teile 19, 20 des Kugelgelenks besitzen eine zentrale Ausnehmung zur Aufnahme eines Gummipfropfens 23, der die beiden Teile 19, 20 gegeneinander elastisch verdrehbar zusammenhält. Da der mögliche Schwenkwinkel des Dorns 4 gegenüber dem Dornhalter 14 klein ist, wird der Gummipfropfen 23 wenig beansprucht.

Die Druckmittelzufuhr zu dem Ringspalt 11 erfolgt über eine Druckmittelanschlußleitung 24 durch den Dornhalter 14 zum Druckmittelanschlußkopf 6 und über dessen Druckmittelzuführkanal zum Ringspalt 8.

Das aus den Teilen 19, 20 gebildete Kugelgelenk führt dazu, daß der Dorn 4 schwimmend im Rohr 1 gelagert ist und keine Querkräfte auf den Dorn 4 aufgrund der axialen Kugelpfannenlagerung auftreten können, die die schwimmende Lagerung des Dorn 4 beeinträchtigen können.

Ferner kommt man mit kurzen Rüstzeiten aus, der Dorn 4 wird in den Dornhalter 14 gesteckt, gedreht und mit dem Verriegelungsbolzen 16 gesichert sowie anschließend mittels des Zylinders 22 hydraulisch in das Rohr 1 eingeführt, wobei der Führungskegel 13 des Gegenlagers 3 ein einwandfreies Einfädeln des Dorns 4 in das Rohr 1 gewährleistet. Ein Auswechseln des Dornes 4 für unterschiedliche Rohrinnendurchmesser ist ohne weiteres möglich.

Durch die schwimmende Lagerung des Dorn 4 und der damit verbundenen kräftemäßigen Entlastung ergeben sich eine wesentlich erhöhte Dornlebensdauer, ein geringes Fertigungsrisiko und beste Vergütungswerte für den Dornkern 5.

Der Dornhalter 14 gewährleistet ein Halten des Dorns 4 in im wesentlichen axialer Ausrichtung beim Einschieben und Herausziehen aus dem Rohr 1, ohne daß der Dorn 4 ansonsten irgendwo unterstützt werden müßte, um nicht nach unten schwenken zu können.

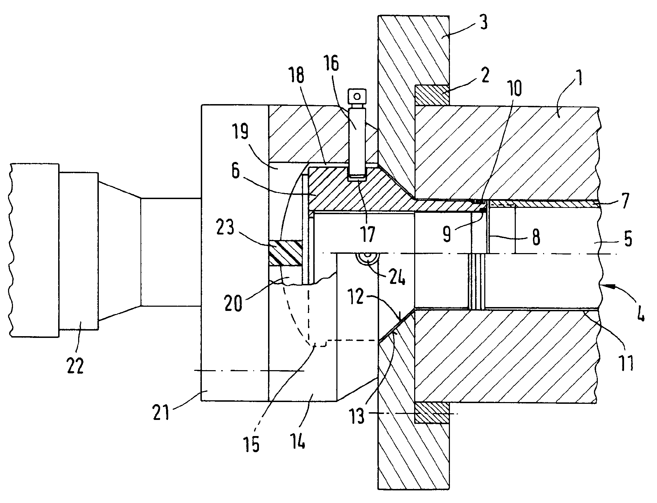

## Patentansprüche

1. Autofrettagevorrichtung für Rohre mit zwei Gegenlagern (3) zur Aufnahme eines Rohrs (1), einem Dichtungsanordnungen (9, 10) tragenden, in das Rohr (1) einführbaren Dorn (4) und einer Druckmittelzuführeinrichtung (8, 24) in einen zwischen Dorn (4) und Rohrinnenwand gebildeten Ringspalt (11), wobei der Dorn (4) von einem Dornhalter (14) aufgenommen wird, **dadurch gekennzeichnet**, daß das vom Dornhalter (14) aufgenommene Ende des Dorns (4) gegenüber dem Dornhalter (14) schwenkbeweglich durch eine Kugelgelenkpfanne (19) abgestützt ist.

2. Autofrettagevorrichtung nach Anspruch 1, dadurch gekennzeichnet, daß die Kugelgelenkpfanne (19) ein Kugelsegment (20) aufnimmt, das sich an dem Dorn (4) stirnseitig abstützt.

3. Autofrettagevorrichtung nach Anspruch 2, dadurch gekennzeichnet, daß die Kugelgelenkpfanne (19) und das Kugelsegment (20) lose von dem Dornhalter (14) aufgenommen sind.

4. Autofrettagevorrichtung nach Anspruch 3, dadurch gekennzeichnet, daß die Kugelgelenkpfanne (19) und das Kugelsegment (20) durch einen Gummipfropfen (23) miteinander verbunden sind.

5. Autofrettagevorrichtung nach einem der Ansprüche 1 bis 4, dadurch gekennzeichnet, daß das dem Dornhalter (14) benachbarte Gegenlager (3) einen Führungskegel (13) zum Einfädeln des Dorns (5) aufweist.

6. Autofrettagevorrichtung nach Anspruch 5, dadurch gekennzeichnet, daß der Dorn (4) einen mit dem Führungskegel (13) in Eingriff bringbaren Kegelstumpfabschnitt (12) aufweist.

7. Autofrettagevorrichtung nach einem der Ansprüche 1 bis 6, dadurch gekennzeichnet, daß der Dorn (4) über einen Bajonetteingriff mit dem Dornhalter (14) verbindbar ist.

8. Autofrettagevorrichtung nach einem der Ansprüche 1 bis 7, dadurch gekennzeichnet, daß der Dorn (4) einen Druckmittelanschlußkopf (6) trägt, der mit einem Dornkern (5) verschraubt, vom Dornhalter (14) wenigstens endseitig aufgenommen und gegenüber diesem verriegelbar ist.

9. Autofrettagevorrichtung nach Anspruch 8, dadurch gekennzeichnet, daß der Druckmittelanschlußkopf (6) Bajonettvorsprünge (15) zum Eingriff mit dem Dornhalter (14) trägt.

10. Autofrettagevorrichtung nach Anspruch 8 oder 9, dadurch gekennzeichnet, daß der Druckmittelanschlußkopf (6) einen mit einem Führungskegel (13) des Gegenlagers (3) in Eingriff bringbaren Kegelstumpfabschnitt (12) aufweist.

## Claims

1. Automatic frettage device for gun barrels with two end supports (3) designed to receive a barrel (1), a mandrel (4) provided with sealing devices (9,10) and insertable in the barrel (1) and a pressure medium feed device (8,24) provided in an annular gap (11) formed between the mandrel (4) and the inner wall of the barrel, the mandrel (4) being accommodated by a mandrel holder (14), characterised by the fact that the end of the mandrel (4) which is accommodated by the mandrel holder (14) is pivotably supported, by means of a ball joint socket (19), in relation to the mandrel holder (14).

2. Automatic frettage device in accordance with Claim 1, characterised by the fact that the ball joint socket (19) accommodates a ball segment (20) bearing against the end face of the mandrel (4).

3. Automatic frettage device in accordance with Claim 2, characterised by the fact that the ball joint socket (19) and the ball segment (20) are loosely accommodated by the mandrel holder (14).

4. Automatic frettage device in accordance with Claim 3, characterised by the fact that the ball joint socket (19) and the ball segment (20) are interconnected by a rubber stopper (23).

5. Automatic frettage device in accordance with any one of Claims 1 to 4, characterised by the fact that the end support (3) adjacent to the mandrel holder (14) has a guide cone (13) to enable the mandrel (4) to be inserted.

6. Automatic frettage device in accordance with Claim 5, characterised by the fact that the mandrel (4) has a truncated cone portion (12) which can be caused to engage the guide cone (13).

7. Automatic frettage device in accordance with any one of Claims 1 to 6, characterised by the fact that the mandrel (4) is connectable to the mandrel holder (14) by a bayonet engagement system.

8. Automatic frettage device in accordance with any one of Claims 1 to 7, characterised by the fact that the mandrel (4) bears a pressure medium connecting head (6) which is screw-connected to a mandrel core (5) and is accommodated at least on one side by the mandrel holder (14) and lockable in relation to the latter.

9. Automatic frettage device in accordance with Claim 8, characterised by the fact that the pressure medium connecting head (6) bears bayonet projections (15) as a means of engagement with the mandrel holder (14).

10. Automatic frettage device in accordance with Claim 8 or 9, characterised by the fact that the pressure medium connecting head (6) has a truncated cone portion (12) which can be caused to engage a guide cone (13) of the end support (3).

## Revendications

1. Dispositif d'autofrettage de tubes avec deux contre appuis (3), en vue de recevoir un tube (1), un mandrin (4), pouvant être introduit dans le tube (1) et portant des agencements d'étanchéité (9, 10), et un dispositif d'amenée de fluide sous pression (8, 24), dans un interstice annulaire (11) formé entre le mandrin (4) et la paroi intérieure du tube, le mandrin (4) étant reçu par un porte-mandrin (14), caractérisé en ce que l'extrémité, reçue par le porte-mandrin (14), du mandrin (4) prend appui par rapport au porte-mandrin (14) de façon à pouvoir pivoter, au moyen d'un coussinet d'articulation sphérique (19).

2. Dispositif d'autofrettage selon la revendication 1, caractérisé en ce que le coussinet d'articulation sphérique (19) reçoit un segment sphérique (20), prenant appui frontalement sur le mandrin (4).

3. Dispositif d'autofrettage selon la revendication 2, caractérisé en ce que le coussinet d'articulation sphérique (19) et le segment sphérique (20) sont reçus dans le porte-mandrin (14) de façon lâche.

4. Dispositif d'autofrettage selon la revendication 3, caractérisé en ce que le coussinet d'articulation sphérique (19) et le segment sphérique (20) sont reliés ensemble au moyen d'un bloc en caoutchouc (23).

5. Dispositif d'autofrettage selon l'une des revendications 1 à 4, caractérisé en ce que le contre-appui (3) voisin du porte-mandrin (14) présente un cône de guidage (13) pour enfiler le mandrin (5).

6. Dispositif d'autofrettage selon la revendication 5, caractérisé en ce que le mandrin (4) présente un tronçon tronconique (12) susceptible d'être mis en contact avec le cône de guidage (13).

7. Dispositif d'autofrettage selon l'une des revendications 1 à 6, caractérisé en ce que le mandrin (4) est susceptible d'être relié au porte-mandrin (14), par l'intermédiaire d'un contact à baïonnette.

8. Dispositif d'autofrettage selon l'une des revendications 1 à 7, caractérisé en ce que le mandrin (4) porte une tête de raccordement de fluide sous pression (6), vissée à un noyau de mandrin (5), reçue à au moins une extrémité par le porte-mandrin (14) et susceptible d'être verrouillée par rapport à celui-ci.

9. Dispositif d'autofrettage selon la revendication 8, caractérisé en ce que la tête de raccordement de fluide sous pression (6) porte des saillies de baïonnette (15) destinée à venir en contact avec le porte-mandrin (14).

10. Dispositif d'autofrettage selon la revendication 8 ou 9, caractérisé en ce que la tête de raccordement de fluide sous pression (6) présente un tronçon tronconique (12), susceptible d'être mis en contact avec un cône de guidage (13) du contre-appui (3).
